# EUROPÄISCHE PATENTSCHRIFT

(11) **EP 1 649 146 B1**
(45) Veröffentlichungstag und Bekanntmachung des Hinweises auf die Patenterteilung: **12.12.2012**
(21) Anmeldenummer: 04740706.9
(22) Anmeldetag: 06.07.2004
(51) Int. Cl.: F01K 25/06, F01K 23/10

(54) **VERFAHREN ZUR ERHÖHUNG DES WIRKUNGSGRADES EINER GASTURBINENANLAGE SOWIE DAFÜR GEEIGNETE GASTURBINENANLAGE**
METHOD FOR INCREASING THE EFFICIENCY OF A GAS TURBINE SYSTEM, AND GAS TURBINE SYSTEM SUITABLE THEREFOR
PROCEDE POUR AUGMENTER LE RENDEMENT D'UNE INSTALLATION DE TURBINE A GAZ, ET INSTALLATION DE TURBINE A GAZ CONÇUE A CET EFFET

(30) Priorität: 31.07.2003 DE 10335143
(43) Veröffentlichungstag der Anmeldung: 26.04.2006
(73) Patentinhaber: SIEMENS AKTIENGESELLSCHAFT, 80333 München (DE)
(72) Erfinder: KLAUS, Roland, 91077 Dormitz (DE); LENGERT, Jörg, 91475 Lonnerstadt-Ailsbach (DE); RUHSLAND, Kathrin, 91325 Adelsdorf (DE)
(86) Internationale Anmeldenummer: PCT/EP2004/007385
(87) Internationale Veröffentlichungsnummer: WO 2005/019606

(56) Entgegenhaltungen:
- EP-A- 0 472 020
- EP-A- 0 949 406
- EP-A- 0 952 316
- US-A1- 2002 053 196
- US-B1- 6 216 436
- GAJEWSKI W ET AL: "DER KALINA-PROZESS" VGB KRAFTWERKSTECHNIK, VGB KRAFTWERKSTECHNIK GMBH. ESSEN, DE, Bd. 69, Nr. 5, 1. Mai 1989 (1989-05-01), Seiten 477-483, XP000028691 ISSN: 0372-5715

## Beschreibung

Die Erfindung bezieht sich auf ein Verfahren zur Erhöhung des Wirkungsgrades einer Gasturbinenanlage gemäß dem unabhängigen Patentanspruch 1 sowie auf eine dafür geeignete Gasturbinenanlage gemäß dem unabhängigen Patentanspruch 6.

Aufgrund intensiver Entwicklungsarbeiten in den letzten Jahren lassen sich mit Gasturbinen heute Wirkungsgrade, d.h. die erzeugbare elektrische oder mechanische Leistung im Verhältnis zu den eingesetzten Brennstoffen, von ca. 40 % erzielen. Gas- und Dampfturbinenanlagen (GuD-Anlagen), wie sie z.B. aus der EP 0898 641 A1 bekannt sind, ermöglichen darüber hinaus Wirkungsgrade von über 55%. Trotzdem besteht ein Bedarf, den Wirkungsgrad solcher Anlagen weiter zu erhöhen.

Dies gilt insbesondere für in der Vergangenheit errichtete Gasturbinenanlagen ohne Dampferzeugung sowie GuD-Anlagen, die in kleinen, mittleren und großen Leistungsbereichen errichtet wurden. Teilweise werden bzw. wurden solche GuD-Anlagen zur Verbesserung der Brennstoffausnutzung mit Fernwärmeauskopplung versehen. Trotzdem weisen diese älteren Anlagen wesentlich geringere Wirkungsgrade auf als moderne Gasturbinenanlagen. Aufgrund enormen Kostendruckes sind deshalb insbesondere die Betreiber von Altanlagen mit geringen Wirkungsgraden dazu gezwungen, die Wirtschaftlichkeit ihrer Anlagen zu verbessern.

Dokument "Der Kalina Prozess", Gajewski W et al., VGB Kraftwerkstechnik, Bd. 69, Nr. 5, 1989, Seiten 477-483, offenbart einen thermodynamischen Kreisprozess mit zwei Stoffen und nicht isothermer Verdampfung zur Stromerzeugung.

Dokument US 6173563 B1 offenbart einen thermodynamischen Kreislauf mit einem Ammoniak-Wasser-Gemisch als Arbeitsmittel, der einem Wasser-Dampfkreislauf nachgeschaltet ist, der dazu dient die Verdichtungsluft zu kühlen.

Die Betreiber von Gasturbinenanlagen ohne Dampferzeugung erweitern deshalb teilweise ihren Prozess bzw. ihre Anlage um einen Dampferzeugungsanteil. Durch die hierdurch mögliche zusätzliche Erzeugung von elektrischer oder mechanischer Energie erreichen sie eine bessere Ausnutzung der eingesetzten Brennstoffe und damit eine Verbesserung des Wirkungsgrades der Anlage. Es ist allerdings für die Betreiber solcher Altanlagen wünschenswert, den Wirkungsgrad ihrer Gasturbinenanlagen noch weiter zu verbessern. Insbesondere sollte eine solche Wirkungsgraderhöhung auch bei bestehenden Gasturbinenanlagen bzw. GuD-Anlagen realisiert werden können.

Es ist deshalb Aufgabe vorliegender Erfindung, ein Verfahren zur Erhöhung des Wirkungsgrades einer Gasturbinenanlage sowie eine dafür geeignete Gasturbinenanlage anzugeben, die eine Erhöhung des Wirkungsgrades der Anlage ermöglichen, wobei die Erhöhung des Wirkungsgrades bei bereits bestehenden Anlagen mit geringem Aufwand, insbesondere ohne große Eingriffe in die bereits bestehende Anlage, möglich sein soll.

Die Lösung der auf das Verfahren gerichteten Aufgabe gelingt durch ein Verfahren gemäß Patentanspruch 1. Vorteilhafte Ausgestaltungen des Verfahrens sind Gegenstand der Unteransprüche 2 bis 5. Die Lösung der auf die Gasturbinenanlage gerichteten Aufgabe gelingt durch eine Gasturbinenanlage gemäß Patentanspruch 6. Vorteilhafte Ausgestaltungen der Gasturbinenanlage sind Gegenstand der Unteransprüche 7 bis 15.

Die Erfindung geht von der Erkenntnis aus, dass viele Gasturbinen oder GuD-Anlagen Abgase (z.B. Rauchgase) mit Temperaturen von über 100°C aufweisen. Dies bedeutet, dass diese Anlagen in den Abgasen enthaltene, noch verwertbare Restwärme nicht nutzen. Dies hat hohe Abgaswärmeverluste und damit hohe Betriebskosten zur Folge. Insbesondere viele GuD-Anlagen werden mit Abgastemperaturen von 120 °C bis 150 °C betrieben, da niedrigere Abgastemperaturen nur mit einem hohen Aufwand realisiert werden können.

Eine Verbesserung des Wirkungsgrades der Gasturbinenanlage ist somit dadurch möglich, dass zumindest ein Teil der Wärme der Abgase einer Gasturbine noch weiter genutzt wird. Dies ist dadurch möglich, dass die Wärme der Abgase an ein zumindest zwei Stoffe mit nicht isothermer Verdampfung und Kondensation aufweisendes Arbeitsmittel eines thermodynamischen Kreisprozesses übertragen wird. Mit Hilfe eines solchen Kreisprozesses kann bei hohem Wirkungsgrad unter Absenkung der Abgastemperatur auf bis zu 50 bis 70 °C mechanische oder elektrische Leistung erzeugt werden, die zur Verbesserung des Wirkungsgrades der Gasturbinenanlage beiträgt und somit die Wirtschaftlichkeit der Anlage verbessert.

Eine erfindungsgemäße Turbinenanlage weist eine Turbinenanlage auf mit allen techischen Merkmaler des unabhängigen Anspruchs 6.

Zur Verbesserung des Wirkungsgrades bei bestehenden Anlagen muss somit nur der zumindest eine nachgeschaltete Wärmetauscher und die Vorrichtung zur Ausführung des thermodynamischen Kreisprozesses nachgerüstet werden. Dies kann bei bestehenden Gasturbinenanlagen z.B. im Rahmen einer Erweiterung zu einer GuD-Anlage erfolgen. Auch bei bestehenden Gasturbinenanlagen in Kombination mit Dampferzeugung (d.h. Nachverbrennung der Gasturbinenabgase in einem Dampferzeuger) und bei GuD-Anlagen mit Rauchgastemperaturen größer 100 °C kann die Restwärme der Abgase durch eine einfache Nachrüstung der Vorrichtung zur Ausführung des thermodynamischen Kreisprozesses zur Erzeugung elektrischer oder mechanischer Leistung genutzt werden. Bei gleicher Brennstoffmenge ist somit eine höhere elektrische oder mechanische Leistung und damit ein höherer Wirkungsgrad der Gasturbinenanlage möglich. Weiterhin führt dies zu einer Reduktion des CO₂-Ausstoßes je erzeugter Kilowattstunde elektrischer Energie.

Bei Gasturbinenanlagen in Kombination mit Dampferzeugung sowie bei GuD-Anlagen ist die Wirkungsgraderhöhung ohne Eingriff in die Hauptanlage möglich, da lediglich abgasseitig, d.h. im Abgasstrang der Gasturbinenanlage, der zumindest eine zusätzliche Wärmetauscher installiert werden muss. Die Nachrüstung des zumindest einen Wärmetauschers sowie der Vorrichtung zur Ausführung des thermodynamischen Kreisprozesses ist daher im Rahmen einer Revision der Hauptanlage mit geringem Aufwand möglich.

Durch die Verwendung eines Arbeitsmittels mit zumindest zwei Stoffen mit nicht isothermer Verdampfung und Kondensation kann zum einen über die Konzentration der zumindest zwei Stoffe und zum anderen durch geringfügige Anpassungen des Druckes und der Temperatur des Arbeitsmittels der thermodynamische Kreisprozess auf einfache Weise an verschiedene Gasturbinenanlagen mit unterschiedlichen Abgastemperaturen angepasst werden.

Die Vorrichtung zur Ausführung des thermodynamischen Kreisprozesses ist deshalb bevorzugt als standardisierte Einheit ausgebildet, die für die Verwendung in unterschiedlichsten Gasturbinenlagen geeignet ist und somit kostengünstig gestaltet werden kann.

Ein hoher Wirkungsgrad und gleichzeitig eine einfache Anpassbarkeit des Prozesses bzw. der Vorrichtung zur Ausführung des Prozesses an unterschiedliche Abgastemperaturen kann dadurch ermöglicht werden, dass als thermodynamischer Kreisprozess ein Kalina-Kreislauf verwendet wird, der z.B. aus dem Aufsatz von Köhler, S. und Saadat, A. "Möglichkeiten und Perspektien der geothermischen Stromerzeugung" in Geothermische Technologieentwicklung - geologische und energietechnische Ansatzpunkte; GeoForschungszentrum Potsdam, STR00/23, 2000, pp. 7 - 28 bekannt ist. Dieser Kreislauf verwendet als Arbeitsmittel ein Zweistoffgemisch z.B. aus Ammoniak und Wasser, wobei das Wasser als Lösungsmittel dient.

Gemäß einer insbesondere für Abgastemperaturen von 140°C bis 200°C geeigneten Ausgestaltung der Erfindung wird der thermodynamische Kreisprozess mit einem Verfahren ausgeführt, das zumindest die folgenden Schritte aufweist:
- Pumpen eines flüssigen Stromes des Arbeitsmittels auf einen erhöhten Druck;
- Aufteilen des druckbeaufschlagten, flüssigen Arbeitsmittel stromes in einen ersten Teilstrom und einen zweiten Teilstrom;
- teilweises Verdampfen des ersten Teilstroms unter Verwendung von Wärme, die durch Abkühlung der Abgase erzeugt wird;
- teilweises Verdampfen des zweiten Teilstroms unter Verwendung von Wärme, die durch teilweise Kondensation eines entspannten Arbeitsmittelstromes erzeugt wird;
- Vereinigen des teilweise verdampften ersten und zweiten Teilstroms zu einem teilweise verdampften Arbeitsmittelstrom;
- Erzeugen eines gasförmigen Arbeitsmittelstromes durch vollständiges Verdampfen, ggfs. teilweises Überhitzen, des teilweise verdampften Arbeitsmittelstromes unter Verwendung von Wärme, die aus der Abkühlung der Abgase erzeugt wird,
- Entspannen des gasförmigen Arbeitsmittelstromes, Umwandeln seiner Energie in eine nutzbare Form und Erzeugen des entspannten Arbeitsmittelstromes; und
- Kondensation des teilweise kondensierten, entspannten Arbeitsmittelstromes zur Bildung des flüssigen Arbeitsmittelstromes.

Der Wirkungsgrad der Vorrichtung und damit der Gasturbinenanlage kann hierbei noch dadurch verbessert werden, dass der erste Teilstrom und der flüssige Arbeitsmittelstrom im Wesentlichen die gleiche Temperatur aufweisen und somit eine bestmögliche Ausnutzung der Wärme der Abgase zur Stromerzeugung ermöglichen.

Ein hoher Wirkungsgrad des thermodynamischen Kreisprozesses, d.h. eine gute Umwandlung der in den Abgasen enthaltenen Wärme in elektrische oder mechanische Leistung ist insbesondere dann möglich, wenn die Abgase der Gasturbine an dem zumindest einen Wärmetauscher eine Temperatur von 100 bis 200°C, insbesondere 140 bis 200°C, aufweisen.

Die Erfindung, sowie weitere vorteilhafte Ausgestaltungen der Erfindung gemäß Merkmalen der Unteransprüche, werden im Folgenden anhand eines Ausführungsbeispieles in den Figuren näher erläutert; darin zeigen
- FIG 1: eine schematische Darstellung einer GuD-Anlage mit einem abgasseitig nachgeschalteten Wärmetauscher zur Wärmeübertragung an eine Vorrichtung zur Ausführung eines thermodynamischen Kreisprozesses mit einem Arbeitsmittel mit zumindest zwei Stoffen mit nicht isothermer Verdampfung und Kondensation in schematischer Darstellung,
- FIG 2: eine vereinfachte Schaltung einer vorteilhaften Vorrichtung zur Ausführung des thermodynamischen Kreisprozesses,
- FIG 3: ein Beispiel für eine Ausbildung der Vorrichtung zur Ausführung des thermodynamischen Kreisprozesses als standardisierte Einheit.

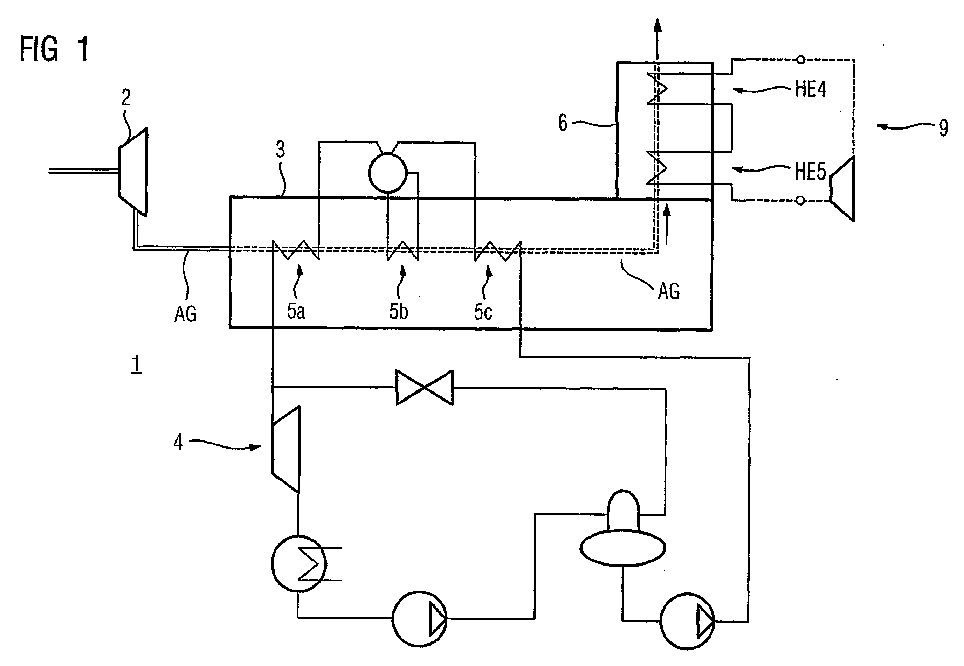

Die Figur 1 zeigt in schematischer Darstellung eine Gas- und Dampfturbinenanlage 1 mit einer Gasturbine 2 und einen von heißen Abgasen AG der Gasturbine 2 durchströmten Abhitzekessel 3. Die Gasturbine wird mit einem offenen Gasturbinenprozeß betrieben.

In einem Abluftkamin 6 der Gas- und Dampfturbinenanlage 1 sind zwei Wärmetauscher HE4, HE5 zur Übertragung von zumindest einem Teil der Wärme der Abgase AG an eine vereinfacht dargestellte Vorrichtung 9 zur Ausführung eines thermodynamischen Kreisprozesse mit einem Arbeitsmittel mit zumindest zwei Stoffen mit nicht isothermer Verdampfung und Kondensation. Bei dem thermodynamischen Kreisprozess handelt es sich z.B um einen Kalinakreislauf.

Abgasseitig sind der Gasturbine und den Wärmetauschern HE4 und HE5 drei Wärmetauscher 5a, 5b, 5c des Wasser/Dampf-kreislaufes 4 der Gas- und Dampfturbinenanlage 1 zwischengeschaltet. Die Wärmetauscher 5a, 5b, 5c sind in dem Abhitzekessel 3 angeordnet und übertragen einen Teil der Wärme der Abgase AG an den Wasser/Dampfkreislauf 4.

Mit Hilfe der Vorrichtung 9 kann die in den Abgasen AG enthaltene Restwärme zur zusätzlichen Stromerzeugung genutzt werden und somit der Wirkungsgrad der Gas- und Dampfturbinenanlage 1 vergrößert werden. Die durch die Nachschaltung der Vorrichtung 9 verursachten Druckverluste in den Abgasen AG, die zu Leistungsverlusten in der Gasturbine 2 führen, können mehr als kompensiert werden durch die Leistungsgewinne durch die Vorrichtung 9.

Eine besonders gute Wärmeübertragung von den Abgasen AG an das Arbeitsmittel der Vorrichtung 9 ist dann möglich, wenn die Wärmetauscher HE4, HE5 als Rohrbündelwärmetauscher ausgebildet sind.

Die Anordnung der Wärmetauscher HE4 und HE5 in dem Abluftkamin 6 ermöglicht es, diese Wärmetauscher und die daran angeschlossene Vorrichtung 9 ohne Eingriffe in die Hauptanlage, d.h. die Gasturbine 2 samt zugehöriger Komponenten und den Wasserdampfkreislauf 4, nachzurüsten. Die Temperatur der Abgase vor dem Wärmetauscher HE5 beträgt bevorzugt 100 bis 200 °C, insbesondere 140 bis 200 °C. Durch die Abkühlung der Abgase AG durch die Wärmetauscher HE5 und HE4 wird die Temperatur der Abgase beispielsweise auf 50 bis 70 °C nach dem Wärmetauscher HE 4 abgesenkt.

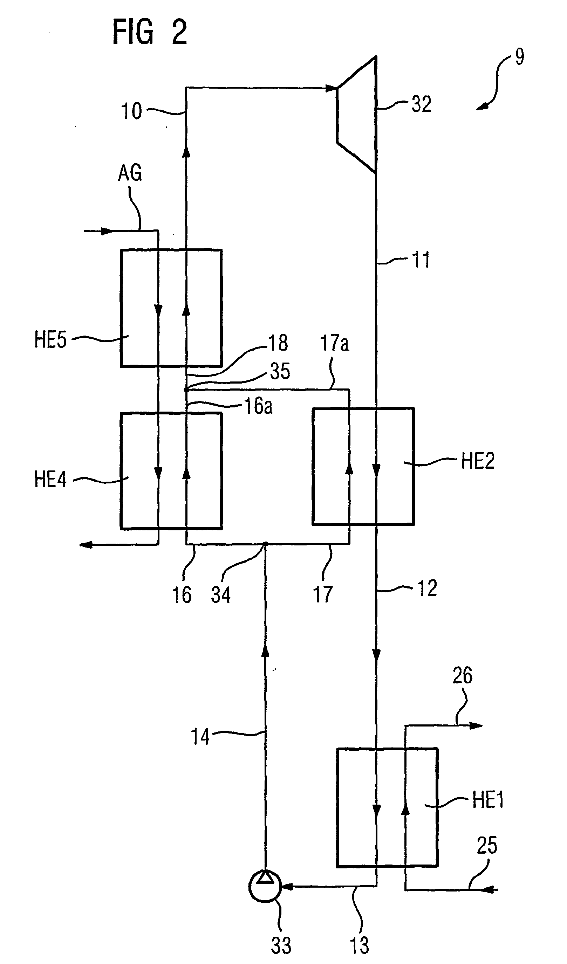

Die Figur 2 zeigt eine besonders für Abgastemperaturen von 140°C bis 200°C geeignete Schaltung der Vorrichtung 9 zur Ausführung eines thermodynamischen Kreisprozesses gemäß Figur 1.

Die Vorrichtung 9 weist einen Wärmetauscher HE5 auf, der primärseitig von den Abgasen (Rauchgasen) AG einer Gasturbine durchströmt wird und sekundärseitig zum einen mit einem Mischer 35 und zum anderen mit einer Turbine 32 verbunden ist. Die Turbine 32 ist ausgangsseitig mit der Sekundärseite eines Wärmetauschers HE2 verbunden, welcher wiederum mit der Primärseite eines Wärmetauschers (Kondensators) HE1 verbunden ist. Der Kondensator HE1 ist an seinem primärseitigen Ausgang, ggfs. über einen Kondensattank, über eine Pumpe 33 mit einem Teiler 34 verbunden. Der Teiler 34 ist zum einen über die Primärseite des Wärmetauschers HE2 und zum anderen über die Sekundärseite eines Wärmetauschers HE4 mit dem Mischer 35 verbunden. Die Abgase AG durchströmen zuerst die Primärseite des Wärmetauschers HE5 und danach die Primärseite des Wärmetauschers HE4.

Als Arbeitsmittel wird in der Vorrichtung 9 ein ZweistoffGemisch aus Wasser und Ammoniak verwendet. Das Arbeitsmittel liegt nach dem Kondensator HE1 in einem flüssigen Zustand als flüssiger Arbeitsmittelstrom 13 vor. Mit Hilfe der Pumpe 33 wird der flüssige Arbeitsmittelstrom 13 auf einen erhöhten Druck gepumpt und ein druckbeaufschlagter, flüssiger Arbeitsmitelstrom 14 erzeugt, der durch den Teiler 34 in einen ersten Teilstrom 16 und einen zweiten Teilstrom 17 aufgeteilt wird.

Der erste Teilstrom 16 wird sekundärseitig von dem Wärmetauscher HE4 aufgenommen und unter Verwendung von Wärme, die durch Abkühlung der bereits in dem Wärmetauscher HE5 abgekühlten Abgase AG erzeugt wird, teilweise verdampft und ein teilweise verdampfter erster Teilstrom 16a erzeugt. Der zweite Teilstrom 17 wird primärseitig von dem Wärmetauscher HE2 aufgenommen und unter Verwendung von Wärme, die durch teilweise Kondensation eines sekundärseitig aufgenommenen entspannten Arbeitsmittelstromes 11 erzeugt wird, teilweise verdampft und ein teilweise verdampfter zweiter Teilstrom 17a erzeugt. Die teilweise verdampften ersten und zweiten Teilströme 16a, 17a werden anschließend in dem Mischer 35 zu einem teilweise verdampften Arbeitsmittelstrom 18 vereinigt. Die Wärmetauscher HE2 und HE4 sind hierbei vorteilhafterweise so dimensioniert, dass der erste und der zweite teilweise verdampfte Teilstrom 16a bzw. 17a in etwa gleiche Temperatur und gleichen Dampfgehalt aufweisen.

Der teilweise verdampfte Arbeitsmittelstrom 18 wird anschließend sekundärseitig von dem Wärmetauscher HE5 aufgenommen und durch Abkühlung der primärseitigen Abgase AG ein vollständig verdampfter, gegebenenfalls teilweise überhitzter, gasförmiger Arbeitsmittelstrom 10 erzeugt. Der gasförmige Arbeitsmittelstrom 10 wird anschließende in der Turbine 32 entspannt, seine Energie in eine nutzbare Form, z.B. über einen nicht dargestellten Generator in Strom, umgewandelt und der entspannte Arbeitsmittelstrom 11 erzeugt. Der entspannte Arbeitsmittelstrom 11 wird in dem Wärmetauscher HE2 teilkondensiert und ein teilkondensierter, entspannter Arbeitsmittelstrom 12 erzeugt. Der teilkondensierte, entspannte Arbeitsmittelstrom 12 wird anschließend in dem Wärmetauscher (Kondensator) HE1 mit Hilfe eines zulaufenden Kühlwasserstromes 25 kondensiert und der flüssige Arbeitsmittelstrom 13 erzeugt. Die durch die Kondensation des entspanntes Arbeitsmittelstrom 12 an den Kühlewasserstrom 25 übertragene Wärme wird durch den ablaufenden Kühlwasserstrom 26 abgeführt.

Der durckbeaufschlagte, flüssige Teilstrom 14 kann über einen weiteren, nicht dargestellten Wärmetauscher durch weitere, teilweise Kondensation des bereits in dem Wärmetauscher HE2 teilweise kondensierten, entspannten Arbeitsmittelstromes 12 vorerwärmt werden.

Eine besonders gute Ausnutzung der Wärme der Abgase und somit ein besonders hoher Wirkungsgrad des Kreislaufes ist allerdings dadurch erzielbar, dass auf diese Vorerwärmung verzichtet wird und somit der erste Teilstrom 16 im wesentlichen die gleiche Temperatur wie der flüssige Arbeitsmittelstrom 13 aufweist.

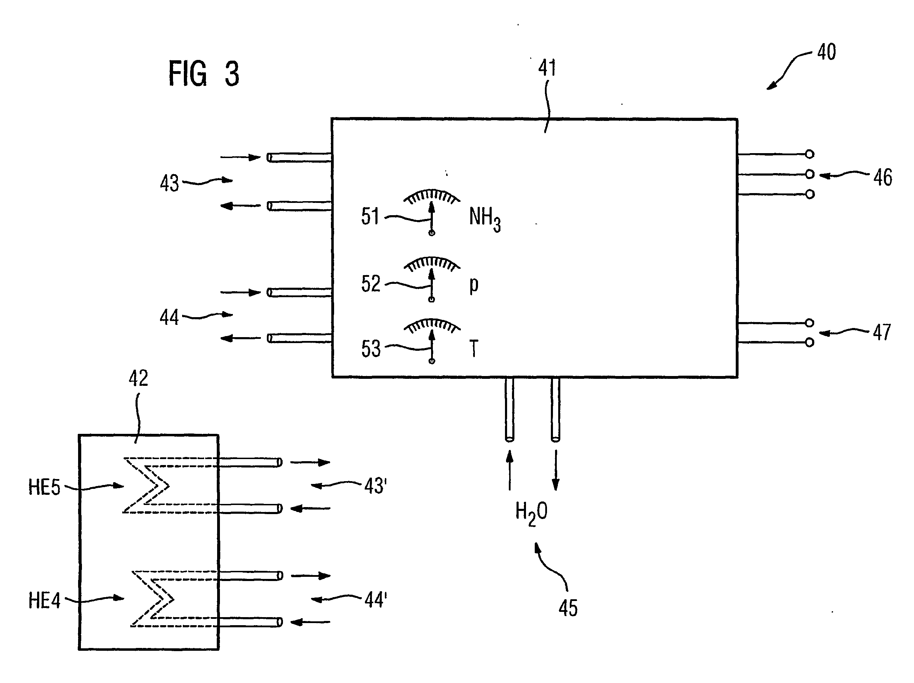

Die Vorrichtung 9 ist hierbei, wie beispielhaft und vereinfacht in FIG3 dargestellt, bevorzugt als standardisierte Einheit 40 ausgebildet. Die standardisierte Einheit 40 umfasst dabei zum einen ein Kreislaufmodul 41, welches sämtliche Komponenten des Kreislaufes mit Ausnahme der Wärmetauscher HE4 und HE5 enthält. Zu diesen Komponenten zählen der Wärmetauscher (Kondensator) HE1, der Wärmetauscher HE2, die Turbine 32, die Pumpe 33, ein mit der Turbine verbundenen Generator und weitere, für die Steuerung, Regelung und Überwachung des Kreislaufes notwendige Einrichtungen.

Die Wärmetauscher HE4 und HE5 sind in einem Wärmetauschermodul 42 angeordnet, welches z.B. in einem Abluftkamin einer Gasturbinenanlage eingebaut werden kann.

Das Kreislaufmodul 41 weist Rohrleitungs-Anschlusspaare 43 und 44 für den Anschluss von Verbindungsrohren zu entsprechenden Rohrleitungs-Anschlusspaaren 43' und 44' an dem Wärmetauschermodul 42 auf. Weiterhin weist das Kreislaufmodul 41 Rohrleitungs-Anschlüsse 45 für die Zuführung und Abführung von Kühlwasser zu bzw. von dem Wärmetauscher (Kondensator) HE1 auf. Mittels der elektrischen Anschlüsse 46 kann der Abgriff des durch das Kreislaufmodul 41 erzeugten Stromes erfolgen. Die elektrischen Anschlüsse 47 dienen der Zuführung von Strom für die Stromversorgung der Einrichtungen zur Steuerung, Regelung, Überwachung des Kreislaufmoduls sowie zur Stromversorgung der Pumpe 3. Eine solche externe Stromversorgung wird zumindest solange benötigt, bis der Stromeigenbedarf durch das Kreislaufmodul 41 selbst gedeckt werden kann. Alternativ kann der Eigenbedarf statt durch eine externe Stromversorgung auch dadurch gedeckt werden, dass das Kreislaufmodul 41 eine Batterie aufweist. Über ein Bedienelement 51 kann die Konzentration der Bestandteile des Arbeitsmittels und über Bedienelemente 52 und 53 kann die Temperatur bzw. der Druck des Arbeitsmittels im Kreislauf eingestellt werden.

Das Kreislaufmodul 41 weist bevorzugt Containerformat auf, insbesondere 20'- oder 40'- Containerformat, und kann somit per LKW, Bahn oder Schiff schnell und einfach zu seinem Einsatzort gebracht werden, so dass eine Nachrüstung der Vorrichtung 9 zur Ausführung des thermodynamischen Kreisprozesses bei einer bestehenden GuD-Anlage mit geringem zeitlichem und finanziellem Aufwand durchgeführt werden kann.

Es kann in der Vorrichtung 9 zur Ausführung des thermodynamischen Kreisprozesses die Anzahl der Wärmetauscher erhöht werden, es können zusätzliche Ventile und Separatoren in die Schaltung geschaltet werden. Weiterhin kann z.B. der gasförmige Arbeitsmittelstrom 10 in mehr als einem schritt, z.B. über zwei hintereinander geschaltete Turbinen, entspannt werden.

## Patentansprüche

1. Verfahren zur Erhöhung des Wirkungsgrades einer Gasturbinenanlage (1), wobei zuerst ein Teil der Wärme der Abgase (AG) einer Gasturbine (2) an einen Wasser-Dampf-Kreislauf (4) einer Dampfturbine und danach ein Teil der Wärme der Abgase (AG) der Gasturbine (2) an ein zumindest zwei Stoffe mit nicht isothermer Verdampfung und Kondensation aufweisendes Arbeitsmittel eines thermodynamischen Kreisprozesses zur zusätzlichen Stromerzeugung übertragen wird.

2. Verfahren nach Anspruch 1,
wobei als thermodynamischer Kreisprozess ein Kalina-Kreislauf verwendet wird.

3. Verfahren nach Anspruch 1 und/oder 2,
wobei der thermodynamische Kreisprozess mit einem Verfahren ausgeführt wird, das zumindest die folgenden Schritte aufweist:
- Pumpen eines flüssigen Stromes (13) des Arbeitsmittels auf einen erhöhten Druck;
- Aufteilen des druckbeaufschlagten, flüssigen Arbeitsmittelstromes (14) in einen ersten Teilstrom (16) und einen zweiten Teilstrom (17);
- teilweises Verdampfen des ersten Teilstroms (16) unter Verwendung von Wärme, die durch Abkühlung der Abgase (AG) erzeugt wird;
- teilweises Verdampfen des zweiten Teilstroms (17) unter Verwendung von Wärme, die durch teilweise Kondensation eines entspannten Arbeitsmittelstromes (11) erzeugt wird;
- Vereinigen des teilweise verdampften ersten und zweiten Teilstroms (16a bzw. 16b) zu einem teilweise verdampften Arbeitsmittelstrom (18);
- Erzeugen eines gasförmigen Arbeitsmittelstromes (10) durch vollständiges Verdampfen, ggfs. teilweises Überhitzen, des teilweise verdampften Arbeitsmittelstromes (18) unter Verwendung von Wärme, die aus der Abkühlung der Abgase (AG) erzeugt wird,
- Entspannen des gasförmigen Arbeitsmittelstromes (10), Umwandeln seiner Energie in eine nutzbare Form und Erzeugen des entspannten Arbeitsmittelstromes (11); und
- Vollständige Kondensation des teilweise kondensierten, entspannten Arbeitsmittelstromes (12) zur Bildung des flüssigen Arbeitsmittelstromes (13).

4. Verfahren nach Anspruch 3,
wobei der erste Teilstrom (16) und der flüssige Arbeitsmittelstrom (13) im Wesentlichen die gleiche Temperatur aufweisen.

5. Verfahren nach einem der vorhergehenden Ansprüche,
wobei die Abgase (AG) der Gasturbine (2) vor dem zumindest einen Wärmetauscher (HE5) eine Temperatur von 100 bis 200°C, insbesondere 140 bis 200°C, aufweisen.

6. Gasturbinenanlage (1) mit zumindest einem einer Gasturbine (2) abgasseitig nachgeschalteten Wärmetauscher (HE5), der in eine Vorrichtung (9) zur Ausführung eines thermodynamischen Kreisprozesses geschaltet ist, wobei die Vorrichtung (9) ein Arbeitsmittel mit zumindest zwei, Stoffen mit nicht isothermer Verdampfung und Kondensation und eine Turbine (32) aufweist, und mit zumindest einem abgasseitig der Gasturbine (2) und dem zumindest einen Wärmetauscher (HE5) zwischengeschalteten weiteren Wärmetauscher (5a, 5b, 5c) eines Wasser-Dampf-Kreislaufes (4) einer Dampfturbine.

7. Gasturbinenanlage (1) nach Anspruch 6,
wobei der thermodynamische Kreisprozeß ein Kalina-Kreislauf ist.

8. Gasturbinenanlage (1) nach Anspruch 6 und/oder 7,
wobei die Vorrichtung (9) zumindest umfasst:
- eine Pumpe (33) zum Pumpen eines flüssigen Stromes (13) des Arbeitsmittels auf einen erhöhten Druck;
- einen Teiler (34) zum Aufteilen des druckbeaufschlagten flüssigen Arbeitsmittelstromes (14) in einen ersten Teilstrom (16) und einen zweiten Teilstrom (17);
- einen ersten Wärmetauscher (HE 4) zur Aufnahme des ersten Teilstromes (16) und zur Erzeugung und Abgabe eines teilweise verdampften ersten Teilstroms (16a) durch Abkühlung der Abgase (AG);
- einen zweiten Wärmetauscher (HE 2) zur Aufnahme eines entspannten Arbeitsmittelstromes (11) und des zweiten Teilstroms (17), zur Abkühlung des entspannten Arbeitsmittelstromes (11) durch Wärmeübertragung zu dem zweiten Teilstrom (17) und zur Abgabe eines teilweise verdampften zweiten Teilstroms (17a) und eines teilweise kondensierten Arbeitsmittelstromes (12);
- einen Mischer (35) zum Vereinigen des teilweise verdampften ersten Teilstromes (16a) und des teilweise verdampften zweiten Teilstromes (17a) zu einem teilweise verdampften Arbeitsmittelstrom (18);
- einen dritten Wärmetauscher (HE5) zur Aufnahme des teilweise verdampften Arbeitsmittelstromes (18) und zur Erzeugung und Abgabe eines gasförmigen, ggfs. überhitzten, Arbeitsmittelstromes (10) durch Abkühlung der Abgase (AG),
- eine Einrichtung (32), insbesondere eine Turbine, zum Entspannen des gasförmigen Arbeitsmittelstromes (10), zum Umwandeln seiner Energie in eine nutzbare Form und zur Abgabe des entspannten Arbeitsmittelstromes (11); und
- einen vierten Wärmetauscher (Kondensator) (HE 1) zur Aufnahme und vollständigen Kondensation des teilweise kondensierten, entspannten Arbeitsmittelstromes (12) und zur Abgabe des flüssigen Arbeitsmittelstromes (13).

9. Gasturbinenanlage (1) nach Anspruch 8,
wobei der erste Teilstrom (16) und der flüssige Arbeitsmittelstrom (13) im wesentlichen die gleiche Temperatur aufweisen.

10. Gasturbinenanlage (1) nach einem der Ansprüche 6 bis 9, wobei die Abgase (AG) der Gasturbine (2) vor dem zumindest einen Wärmetauscher (HE5) eine Temperatur von 100 bis 200°C, insbesondere 140 bis 200°C, aufweisen.

11. Gasturbinenanlage (1) nach einem der Ansprüche 6 bis 10, wobei der zumindest eine Wärmetauscher (HE 5) in einem Abluftkamin (6) der Gasturbinenanlage (1) angeordnet ist.

12. Gasturbinenanlage (1) nach einem der Ansprüche 6 bis 11, wobei der zumindest eine Wärmetauscher (HE5) als Rohrbündelwärmetauscher ausgebildet ist.

13. Gasturbinenanlage (1) nach einem der Ansprüche 6 bis 12, wobei die Vorrichtung (9) zur Ausführung des thermodynamischen Kreisprozesses als standardisierte Einheit (40) ausgebildet ist.

14. Gasturbinenanlage (1) nach Anspruch 13,
wobei die standardisierte Einheit (40) ein Wärmetauschermodul (42) und ein Kreislaufmodul (41) aufweist.

15. Gasturbinenanlage nach Anspruch 13 und/oder 14,
wobei das Kreislaufmodul (42) Containerformat, insbesondere 20'- oder 40'- Containerformat, aufweist.

## Claims

1. Method for increasing the efficiency of a gas turbine system (1), with a part of the heat of the waste gas (AG) of a gas turbine (2) first being transferred to a water-steam circulation (4) of an steam turbine and thereafter a part of the heat of the waste gases (AG) of the gas turbine (2) being transferred to a working medium of a thermodynamic circulation process featuring at least two materials with non-isothermal evaporation and condensation for further power generation.

2. Method according to claim 1,
with a Kalina cycle being used as the thermodynamic circulation process.

3. Method according to claim 1 and/or 2,
with the thermodynamic circulation process being carried out with a method having at least the following steps:
- Pumping a liquid flow (13) of the working medium at an increased pressure;
- Separating the pressurized liquid working medium flow (14) into a first part flow (16) and a second part flow (17);
- Part evaporation of the first part flow (16) using heat generated by cooling down of the waste gases (AG);
- Part evaporation of the second part flow (17) using heat generated by part condensation of an expanded working medium flow (11);
- Combination of the partly evaporated first and second part flow (16a or 16b) into a partly evaporated working medium flow (18);
- Creation of a gaseous working medium flow (10) by complete evaporation, if necessary part superheating, of the partly evaporated working medium flow (18) using heat which is generated from the cooling down of the waste gases (AG),
- Expansion of the gaseous working medium flow (10), conversion of its energy into a usable form and creation of the expanded working medium flow (11); and
- Complete condensation of the partly condensed, expanded working medium flow (12) to form the liquid working medium flow (13).

4. Method according to claim 3,
with the first part flow (16) and the liquid working medium flow (13) having essentially the same temperature.

5. Method according to one of the preceding claims, with the waste gases (AG) of the gas turbine (2) upstream of the at least one heat exchanger (HE5) having a temperature of 100 to 200°C, especially 140 to 200°C.

6. Gas turbine system (1) with at least one heat exchanger (HE5) connected downstream on the waste gas side of a gas turbine (2) which is connected into a device (9) for executing a thermodynamic cycle process, with the device (9) having a working medium with at least two substances with non-isothermal evaporation and condensation and a turbine (32) and with at least one further heat exchanger (5a, 5b, 5c) of a water-steam cycle (4) of a steam turbine connected on the waste gas side of the gas turbine (5) between the turbine and the at least one heat exchanger (HE5).

7. Gas turbine system (1) according to claim 6,
with the thermodynamic circulation process being a Kalina cycle.

8. Gas turbine system (1) according to claim 6 and/or 7, with the device (9) at least including:
- A pump (33) for pumping a liquid flow (13) of the working medium at an increased pressure;
- A separator (34) for separating the pressurized liquid working medium flow (14) into a first part flow (16) and a second part flow (17);
- A first heat exchanger (HE4) for accepting the first part flow (16) and for creating and emitting a partly evaporated first part flow (16a) by cooling down the waste gases (AG);
- A second heat exchanger (HE2) for accepting an expanded working medium flow (11) and the second part flow (17), for cooling down the expanded working medium flow (11) by transferring heat to the second part flow (17) and for emitting a partly evaporated second part flow (17a) and a partly condensed working medium flow (12);
- A mixer (35) for combining the partly evaporated first part flow (16a) and the partly evaporated second part flow (17a) into a partly evaporated working medium flow (18);
- A third heat exchanger (HE5) for accepting the partly evaporated working medium flow (18) and for generating and emitting a gaseous, possibly superheated working medium flow (10) by cooling down the waste gases (AG),
- A device (32), especially a turbine, for expanding the gaseous working medium flow (10), for converting its energy into a usable form and for emitting the expanded working medium flow (11); and
- A fourth heat exchanger (condenser) (HE1) for accepting and complete condensation of the partly condensed, expanded working medium flow (12) and for emitting the liquid working medium flow (13).

9. Gas turbine system (1) according to claim 8,
with the first part flow (16) and the liquid working medium flow (13) having essentially the same temperature.

10. Gas turbine system (1) according to one of the claims 6 to 9, with the waste gases (AG) of the gas turbine (2) upstream of the at least one heat exchanger (HE5) having a temperature of 100 to 200°C, especially 140 to 200°C.

11. Gas turbine system (1) according to one of the claims 6 to 10, with the at least one heat exchanger (HE5) being arranged in an exhaust air chimney (6) of the gas turbine system (1).

12. Gas turbine system (1) according to one of the claims 6 to 11, with the at least one heat exchanger (HE5) being embodied as a shell and tube heat exchanger.

13. Gas turbine system (1) according to one of the claims 6 to 12, with the device (9) for carrying out the thermodynamic circulation process being embodied as a standardised unit (40).

14. Gas turbine system (1) according to claim 13,
with the standardised unit (40) featuring a heat exchanger module (42) and a circulation module (41).

15. Gas turbine system according to claim 13 and/or 14, with the circulation module (42) having a container format, especially a 20' or 40' container format.

## Revendications

1. Procédé pour augmenter le rendement d'une installation ( 1 ) de turbine à gaz, dans lequel on transmet, pour la production supplémentaire de courant, d'abord une partie de la chaleur des gaz ( AG ) d'échappement d'une turbine ( 2 ) à gaz à un circuit ( 4 ) eau-vapeur d'une turbine à vapeur et ensuite une partie de la chaleur des gaz ( AG ) d'échappement de la turbine ( 2 ) à gaz a au moins un fluide de travail, ayant au moins deux substances ayant une évaporation et une condensation non isothermes, d'un cycle thermodynamique.

2. Procédé suivant la revendication 1,
dans lequel on utilise un circuit Kalina comme cycle thermodynamique.

3. Procédé suivant la revendication 1 et/ou 2,
dans lequel on exécute le cycle thermodynamique par un procédé qui a au moins les stades suivants :
- on met un courant ( 13 ) liquide du fluide de travail par pompage à une pression élevée ;
- on répartit le courant ( 14 ) liquide de fluide de travail mis sous pression en un premier sous-courant ( 16 ) et en un deuxième sous-courant ( 17 ) ;
- on évapore partiellement le premier sous-courant ( 16 ), en utilisant de la chaleur qui est produite par refroidissement des gaz ( AG ) d'échappement ;
- on évapore partiellement le deuxième sous-courant ( 17 ), en utilisant de la chaleur qui est produite par condensation partielle d'un courant ( 11 ) détendu de fluide de travail ;
- on réunit le premier et le deuxième sous-courants ( 16a et 16b ) évaporés partiellement en un courant ( 18 ) de fluide de travail évaporé partiellement ;
- on produit un courant ( 10 ) gazeux de fluide de travail en évaporant complètement, le cas échéant avec surchauffe partielle, le courant ( 18 ) de fluide de travail évaporé partiellement, en utilisant de la chaleur qui est produite à partir du refroidissement des gaz ( AG ) d'échappement ;
- on détend le courant ( 10 ) gazeux de fluide de travail, on transforme son énergie en une forme utilisable et on produit le courant ( 11 ) de fluide de travail détendu ; et
- on condense complètement le courant ( 12 ) de fluide de travail détendu et partiellement condensé pour former le courant ( 13 ) liquide de fluide de travail.

4. Procédé suivant la revendication 3,
dans lequel le premier sous-courant ( 16 ) et le courant ( 13 ) liquide de fluide de travail ont sensiblement la même température.

5. Procédé suivant l'une des revendications précédentes,
dans lequel les gaz ( AG ) d'échappement de la turbine ( 2 ) à gaz ont, avant le au moins un échangeur de chaleur ( HE5 ), une température de 100 à 200°C, notamment de 140 à 200°C.

6. Installation ( 1 ) de turbine à gaz ayant au moins un échangeur de chaleur ( HE5 ) monté en aval du côté de la sortie des gaz d'une turbine ( 2 ) à gaz et monté dans un dispositif ( 9 ) de réalisation d'un cycle thermodynamique, le dispositif ( 9 ) comprenant un fluide de travail, ayant au moins deux substances ayant une évaporation et une condensation non isothermes, et une turbine ( 32 ) et ayant au moins un autre échangeur de chaleur ( 5a, 5b, 5c ), du côté de la sortie des gaz entre la turbine ( 2 ) à gaz et le au moins un échangeur de chaleur ( HE5 ), d'un circuit ( 4 ) eau-vapeur d'une turbine à vapeur.

7. Installation ( 1 ) de turbine à gaz suivant la revendication 6,
dans laquelle le cycle thermodynamique est un circuit Kalina.

8. Installation ( 1 ) de turbine à gaz suivant la revendication 6 et/ou 7,
dans laquelle le dispositif ( 9 ) comprend au moins :
- une pompe pour mettre par pompage un courant ( 13 ) liquide du fluide de travail à une pression élevée ;
- un diviseur ( 34 ) pour diviser le courant ( 14 ) liquide de fluide de travail mis sous pression en un premier sous-courant ( 16 ) et en un deuxième sous-courant ( 17 ) ;
- un premier échangeur de chaleur ( HE 4 ) de réception du premier sous-courant ( 16 ) et de production et de sortie d'un premier sous-courant ( 16a ) évaporé partiellement par refroidissement des gaz ( AG ) d'échappement ;
- un deuxième échangeur de chaleur ( HE 2 ) de réception d'un courant ( 11 ) de fluide de travail détendu et du deuxième sous-courant ( 17 ), pour le refroidissement du courant ( 11 ) de fluide détendu par transmission de la chaleur au deuxième sous-courant ( 17 ) et pour la sortie d'un deuxième sous-courant ( 17a ) évaporé partiellement et d'un courant ( 12 ) de fluide de travail condensé partiellement ;
- un mélangeur ( 35 ) pour réunir le premier sous-courant ( 16a ) évaporé partiellement et le deuxième sous-courant ( 17a ) évaporé partiellement en un courant ( 18 ) de fluide de travail évaporé partiellement ;
- un troisième échangeur de chaleur ( HE5 ) de réception du courant ( 18 ) de fluide de travail évaporé partiellement et de production et de sortie d'un courant ( 10 ) de fluide de travail gazeux, le cas échéant surchauffé, par refroidissement des gaz ( AG ) d'échappement ;
- un dispositif ( 32 ) notamment une turbine, de détente du courant ( 10 ) gazeux de fluide de travail pour transformer son énergie en une forme utilisable et pour la sortie du courant ( 11 ) de fluide de travail détendu ; et
- un quatrième échangeur de chaleur ( condenseur ) ( HE 1 ) de réception et de condensation complète du courant ( 12 ) de fluide de travail détendu et condensé partiellement et de sortie du courant ( 13 ) de fluide liquide de travail.

9. Installation ( 1 ) de turbine à gaz suivant la revendication 8,
dans laquelle le premier sous-courant ( 16 ) et le courant ( 13 ) liquide de fluide de travail ont sensiblement la même température.

10. Installation ( 1 ) de turbine à gaz suivant l'une des revendications 6 à 9,
dans lequel les gaz ( AG ) d'échappement de la turbine ( 2 ) à gaz ont, avant le au moins un échangeur de chaleur ( HE5 ), une température de 100 à 200°C, notamment de 140 à 200°C.

11. Installation ( 1 ) de turbine à gaz suivant l'une des revendications 6 à 10,
dans laquelle le au moins un échangeur de chaleur ( HE 5 ) est disposé dans une cheminée ( 6 ) d'air évacué de l'installation ( 1 ) de turbine à gaz.

12. Installation ( 1 ) de turbine à gaz suivant l'une des revendications 6 à 11,
dans laquelle le au moins un échangeur de chaleur ( HE5 ) est constitué en échangeur de chaleur à faisceau tubulaire.

13. Installation ( 1 ) de turbine à gaz suivant l'une des revendications 6 à 12,
dans laquelle le dispositif ( 9 ) de réalisation du cycle thermodynamique est constitué sous la forme d'une unité ( 40 ) normalisée.

14. Installation ( 1 ) de turbine à gaz suivant la revendication 13,
dans laquelle l'unité ( 40 ) normalisée a un module ( 42 ) d'échangeur de chaleur et un module ( 41 ) de circuit.

15. Installation ( 1 ) de turbine à gaz suivant la revendication 13 et/ou 14,
dans laquelle le module ( 12 ) de circuit a un format de conteneur, notamment, un format de conteneur à 20'- ou 40'-.
